(19) Europäisches Patentamt

European Patent Office

Office européen des brevets

(11) **EP 2 354 813 B1**

(12) **FASCICULE DE BREVET EUROPEEN**

(45) Date de publication et mention de la délivrance du brevet:
**24.04.2019 Bulletin 2019/17**

(21) Numéro de dépôt: **11290051.9**

(22) Date de dépôt: **28.01.2011**

(51) Int Cl.:
*G01V 1/30* *(2006.01)*     *E21B 41/00* *(2006.01)*

(54) **PROCÉDÉ POUR CARACTÉRISER UN PANACHE DE CO2 DANS UN AQUIFÈRE DE STOCKAGE GÉOLOGIQUE**

**CHARAKTERISIERUNGSVERFAHREN EINER CO2-FAHNE IN EINER WASSERFÜHRENDEN GEOLOGISCHEN LAGERSCHICHT**

**METHOD FOR CHARACTERISING A PLUME OF CO2 IN A GEOLOGICAL STORAGE AQUIFER**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.02.2010 FR 1000491**

(43) Date de publication de la demande:
**10.08.2011 Bulletin 2011/32**

(73) Titulaire: **IFP Energies nouvelles**
**92500 Rueil-Malmaison (FR)**

(72) Inventeurs:
• **Sallee, Noalwenn**
  **75014 Paris (FR)**
• **Rasolofosaon, Patrick**
  **91940 Les Ulis (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**US-A1- 2002 013 687**

• **DAVID LUMLEY: "4D seismic monitoring of CO2 sequestration", THE LEADING EDGE, 1 février 2010 (2010-02-01), pages 150-155, XP002616868,**
• **ANDY CHADWICK ET AL.: "Quantitative analysis of time-lapse seismic monitoring data at the sleipner CO2 storage operation", THE LEADING EDGE, 1 février 2010 (2010-02-01), page 170-177, XP002616869,**
• **TIZIANA VANORIO ET AL.: "The rock physics basis for 4D seismic monitoring of CO2 fate: are we there yet?", THE LEADING EDGE, 1 février 2010 (2010-02-01), XP002616870,**
• **JERRY M. HARRIS: "Seismic monitoring of CO2 sequestration", GCEP TECHNICAL REPORT, 2006, XP002616871,**

## Description

L'invention concerne le domaine technique du stockage géologique de gaz à effet de serre, tel que le dioxyde de carbone ($CO_2$), et plus particulièrement la surveillance de site géologique de stockage de ces gaz.

La présente invention propose un procédé de quantification du $CO_2$ sous forme libre dans un stockage géologique, basée sur l'analyse de données sismiques.

Les scénarios établis par le GIEC (Groupe d'experts Intergouvernemental sur l'Évolution du Climat) montrent que la concentration en $CO_2$ dans l'atmosphère, en l'absence de toute mesure corrective, évoluera d'une concentration actuelle de 360 ppm à plus de 1000 ppm à la fin du XXIème siècle avec des conséquences importantes sur le changement climatique. La capture des émissions de $CO_2$ sur les sources à fort débit (ex : centrales thermiques), le transport de ce $CO_2$ et son stockage dans des formations souterraines appropriées est une des solutions parmi d'autres pour réduire les émissions de gaz à effet de serre. Des projets pilotes de stockage géologique de $CO_2$ existent d'ores et déjà, mais la poursuite du déploiement de cette technologie nécessite des technologies de grande qualité pour répondre aux exigences des réglementations en cours de mise en place ainsi que pour répondre aux attentes du public.

Les aquifères salins profonds présentent le plus fort potentiel pour le stockage géologique de $CO_2$ parmi toutes les formations géologiques envisagées de part leur répartition géographique et leur capacité de stockage théorique.

Le volume du $CO_2$ injecté dans une formation géologique souterraine est facilement connu par mesure du débit de gaz en tête de puits. Toutefois, le devenir du $CO_2$ une fois injecté est beaucoup plus difficile à maîtriser : le $CO_2$ peut migrer verticalement hors de la formation de stockage (dans des couches géologiques plus superficielles, voire jusqu'en surface) ou latéralement dans la formation hôte dans des zones non prévues initialement. De plus, le $CO_2$ peut connaître des modifications physico-chimiques au cours du temps susceptibles de lui faire prendre des formes différentes parmi lesquelles : la forme libre (gazeuse ou supercritique), la forme dissoute dans la saumure ou encore par exemple une forme minéralisée.

Ainsi, un suivi le plus complet possible du devenir du $CO_2$ injecté doit être réalisé pour être conforme aux réglementations en vigueur, ainsi que pour aider à l'acceptation sociétale de cette technologie. Ce suivi complet doit impliquer la détection de fuite hors de la formation géologique de stockage et leur quantification ainsi qu'un bilan volumique et/ou massique du $CO_2$ en place dans la formation géologique de stockage.

## État de la technique

Les documents suivants reflètent l'état de la technique :

- Arts, R. et al., 2002. Estimation of the mass of injected CO2 at Sleipner using time-lapse seismic data, Expanded Abstracts of the 64th EAGE, Florence 2002,paper H016.
- Calvert, R., 2005, Insights and Methods for. 4D Reservoir Monitoring and Characterization, SEG/EAGE DISC (Distinguished Lecture Course), 2005.
- Chadwick, R.A., Arts, R. et O. Eiken, 2005,.4D seismic quantification of a growing CO2 plume at Sleipner, North Sea, In: DORE', A. G. & VINING, B. A. (eds) Petroleum Geology: North-West Europe and Global Perspectives-Proceedings of the 6th Petroleum Geology Conference, 1385-1399.
- Bourbié, T., Coussy, O.et B. Zinszner, 1987, Acoustics of porous media, Editions Technip, Paris.
- Rasolofosaon P., Zinszner B., 2004, Laboratory petroacoustics for seismic monitoring feasibility study. The Leading Edge, v. 23; no. 3, p. 252-258.
- Rasolofosaon, P.N.J. and Zinszner, B.E., 2007. The unreasonable success of Gassmann's theory ... Revisited, Journal of seismic Exploration, Volume 16, Number 2-4, 281-301.
- Zinszner, B. et F.M. Pellerin, 2007, A geoscientist's guide to petrophysics, Editions Technip, Paris.

US 20020013687 décrit un procédé de surveillance d'un site de stockage géologique de CO2.

Pour suivre l'évolution des fluides produits ou injectés au sein d'un milieu poreux, de nombreuses techniques ont été développées par les industriels. Parmi ces techniques, la sismique répétitive, dite sismique 4D, est utilisée dans l'industrie (pétrolière ou environnementale). Une telle technique consiste à réaliser différentes campagnes sismiques, à des moments différents (en général les campagnes sont espacées d'au moins une année). Ainsi, le spécialiste peut suivre l'évolution des fluides du réservoir en production ou du site géologique de stockage (par exemple, Calvert, 2005).

Les données sismiques estimées (vitesses) à partir des données acquises permettent de remonter aux propriétés élastiques des fluides produits ou injectés à travers un modèle théorique, en général de type poroélastique (Biot-Gassmann) (par exemple, Bourbié et al., 1987, Rasolofosaon et Zinszner, 2004 et 2007).

Toutes ces techniques ont été exploitées dans le domaine environnemental pour estimer, à partir des données sismiques, le volume total et la masse totale de $CO_2$ en place dans le sous-sol.

Par exemple, Arts et al. (2002) exploite les mesures du retard pris par l'onde sismique pour traverser les couches du sous-sol envahies par le $CO_2$, par rapport à une propagation plus rapide dans le sous-sol saturé de saumure, pour repérer la zone envahie de $CO_2$ et estimer le volume total de $CO_2$ en place. Ces auteurs utilisent le modèle théorique de Gassmann (par exemple, Rasolofosaon et Zinszner, 2004 et 2007). De plus, en supposant connue la densité moyenne du $CO_2$ dans les conditions du réservoir (Pression et Température) ils arrivent à une estimation de la masse totale de $CO_2$ en place, qu'ils comparent avec plus ou moins de succès à la masse de $CO_2$ réellement injectée.

Dans une approche similaire mais plus sophistiquée, Chadwick et al. (2005) exploitent non seulement les données de temps propagations des ondes, mais également les amplitudes des ondes sismiques. Ils arrivent à des estimations un peu plus fines de la répartition du $CO_2$ et de la masse totale de $CO_2$ en place que celles des précédents auteurs, sans toutefois aller jusqu'à la répartition tridimensionnelle des saturations en $CO_2$ comme proposée dans notre procédé.

Les principaux inconvénients des méthodes précédentes peuvent être résumés en deux principaux points:

- Les analyses précédentes reposent essentiellement sur l'analyse des temps de propagation et des amplitudes des ondes, et non sur une inversion complète des données sismiques avec estimation réellement quantitative en tout point du sous-sol des paramètres élastiques (impédances, modules d'incompressibilité,...). Or, en analysant les temps ou les amplitudes, il n'est pas possible de réaliser une véritable analyse quantitative. En effet, si l'on prend par exemple l'analyse des variations de temps de propagation dans la couche de stockage due à l'injection de $CO_2$, on aboutit à une estimation de la variation de vitesse globale dans toute la couche (et non locale, en chaque point).

- Toutes ces méthodes reposent sur l'utilisation d'un modèle élastique du milieu poreux, dont la robustesse n'est plus à démontrer, mais dont l'estimation des paramètres clés (modules d'incompressibilité et de cisaillement drainés notamment, et compressibilités du grain dans une moindre mesure) est toujours problématique (par exemple, Arts 2002 et Calvert et al. 2005).

Le procédé proposé ici permet de s'abstraire de ces modèles théoriques, en restant proches des seules données sismiques. Il utilise les résultats d'inversions sismiques (en impédances) et exploite le fait que l'injection de $CO_2$ dans un aquifère, de préférence salin profond, est un phénomène physique de premier drainage (Zinszner et Pellerin, 2007).

**Le procédé selon l'invention**

L'objet de l'invention concerne ainsi un procédé de surveillance d'un site de stockage géologique de $CO_2$, selon la revendication 1.

Selon l'invention, il est également possible de déterminer un volume du panache de $CO_2$ libre, en réalisant les étapes suivantes :

- on construit un cube de saturation en $CO_2$ au sein de ladite formation, à partir dudit cube de variation relative de la masse volumique ;
- on détermine ledit volume dudit panache de $CO_2$ libre en sommant toutes les valeurs du cube de saturation en $CO_2$, et en pondérant ladite somme par une porosité moyenne de ladite formation et par un volume occupé par une cellule élémentaire dudit cube de saturation.

On peut également déterminer une masse dudit panache de $CO_2$ libre, en multipliant ledit volume dudit panache de $CO_2$ libre par une masse volumique moyenne du $CO_2$.

Le cube de saturation en $CO_2$ peut être construit en réalisant les étapes suivantes :

- on détermine une saturation $S_{wi}$ irréductible en saumure de ladite formation ;
- on détermine une valeur absolue maximale dudit cube de variation de masse volumique, et on calcule un rapport en divisant cette valeur absolue maximale par 1 - $S_{wi}$ ;
- on construit un cube de saturation en $CO_2$ en multipliant chaque valeur dudit cube de variation de masse volumique par ledit rapport; et
- on convertit en profondeur ledit cube de saturation au moyen d'une technique de conversion temps-profondeur.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- La figure 1 illustre des étapes du procédé selon l'invention.
- La figure 2 montre une coupe horizontale, à profondeur fixée au niveau du sommet du panache de $CO_2$ du cube seuillé *RVKS* des variations relatives du module d'incompressibilité pour quatre valeurs du seuil.
- La figure 3 représente des vues tridimensionnelles du panache complet de $CO_2$, coupé par un plan vertical orienté Sud-Ouest Nord-Est (à gauche) et Sud-Est Nord-Ouest (à droite).
- La figure 4 illustre des coupes horizontales au niveau du sommet (à gauche) et au niveau de la base (à droite) du panache de $CO_2$ du cube *SC* de saturation en $CO_2$.
- Les figures 5 et 6 illustrent la qualité des résultats fournis par le procédé en comparant le volume total (figure 5) de $CO_2$ en condition de fond et la masse totale (figure 6) de $CO_2$ injecté en fonction du temps calendaire, ainsi que les estimations obtenues à partir du procédé selon l'invention.

**Description détaillée du procédé**

La présente invention propose un procédé de quantification du $CO_2$ sous forme libre dans un stockage géologique, basée sur l'analyse de données sismiques répétitives, dites sismiques 4D.

Le procédé caractérise le panache de $CO_2$, en déterminant la localisation et l'extension géographique du panache, ainsi que son volume et sa masse.

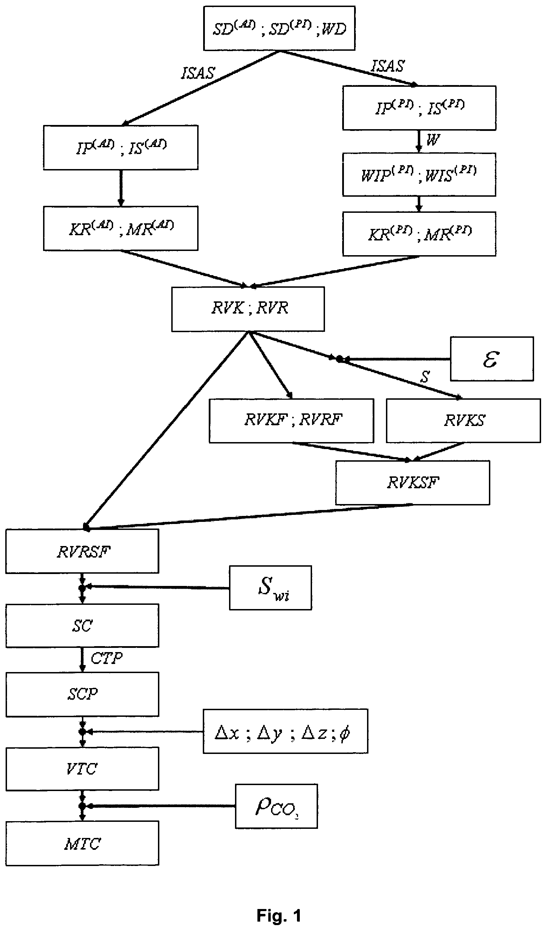

La figure 1 illustre des étapes du procédé selon l'invention. Il comporte trois étapes principales :

1. Acquisition de données et injection de $CO_2$
2. Localisation du panache de $CO_2$

- Détermination des impédances sismiques (ou vitesses des ondes sismiques)
- Construction de cubes de variation de masse volumique et d'incompressibilité
- Localisation du panache de $CO_2$

3. Détermination du volume et de la masse du panache de $CO_2$

- Construction d'un cube de saturation en $CO_2$ au sein du sous-sol
- Détermination du volume et de la masse du panache de $CO_2$.

1. Acquisition de données et injection de $CO_2$

En premier lieu, on acquiert un premier jeu de données sismiques 3D, avant l'injection (*AI*) de $CO_2$ dans l'aquifère. Ce premier jeu permet d'imager une zone du sous-sol contenant l'aquifère d'injection. Ce jeu est noté $SD^{(AI)}$. Ces données constituent un premier cube d'amplitude sismique.

On réalise une injection de $CO_2$ dans l'aquifère.

On acquiert ensuite un second jeu de données sismiques 3D (donc après l'injection (*PI*) de $CO_2$). Ce second jeu permet d'imager la même zone du sous-sol que celle imagée par le premier jeu de données. Ce jeu est noté $SD^{(PI)}$. Ces données constituent un second cube d'amplitude sismique.

On dispose ainsi de deux images d'une zone du sous-sol contenant l'aquifère d'injection. De façon connue des spécialistes, qui connaissent les méthodes de sismiques 4D, le dispositif d'acquisition de ces données sismiques doit être sensiblement le même, de façon à obtenir des images comparables.

On peut également acquérir, en vue d'une inversion stratigraphique (étape 2.1), des données de puits, notées *WD*. Ces données comprennent des diagraphies (logs de puits) de densité, et des diagraphies de vitesses d'ondes sismiques P et S.

2. Localisation du panache de $CO_2$

La localisation du panache de $CO_2$ au sein du sous-sol repose sur la connaissance de la variation relative du module d'incompressibilité et sur la variation relative de la masse volumique des formations géologiques du sous-sol envahie par le $CO_2$.

Le module d'incompressibilité, noté K, d'une roche est le coefficient de proportionnalité entre la pression de confinement isotrope exercée sur un échantillon de cette roche et la variation relative de volume (ou déformation volumique) de cet échantillon résultant de cette mise en pression.

La détermination de ces cubes de variation au sein du sous-sol se base uniquement sur les impédances sismiques issues directement des données sismiques.

2.1 Détermination des impédances sismiques (ou vitesses des ondes sismiques)

La détermination des impédances sismiques se base sur une inversion stratigraphique des cubes de données sismiques 4D. Une telle technique est bien connue des spécialistes.

Selon un mode de réalisation, on transforme les deux cubes d'amplitudes sismiques en impédances sismiques (ou en vitesses sismiques), au moyen d'une inversion stratigraphique avant sommation (*ISAS*). Une méthode d'inversion stratigraphique est décrite dans les documents suivants par exemple :

- T. Tonellot, D. Macé, V. Richard, 1999, Prestack elastic waveform inversion using a priori information, 69th Ann. Internat. Mtg: Soc. of Expl. Geophys., paper 0231, p.800-804.

- Tonellot T., Macé D. and Richard V. [2001]. Joint stratigraphic inversion of angle-limited stacks. 71st SEG Annual International Meeting, Expanded Abstracts, 227-230.

- A.S Barnola, B. Andrieux, T. Tonellot et O. Voutay, 2003, Pre-stack stratigraphic inversion and attribute analysis for optimal reservoir characterisation, SEG Expanded Abstracts 22, 1493 (2003); doi:10.1190/1.1817576

Les données de puits *WD* permettent la construction et le calage d'un modèle a priori, souvent utilisé dans les techniques d'inversion stratigraphique.

Les données obtenues après inversion sont les cubes d'impédance en onde P et en onde S, respectivement notées $IP^{(AI)}$ et $IS^{(AI)}$ pour les données avant injection, et $IP^{(PI)}$ et $IS^{(PI)}$ pour les données après injection.

Toutes les données utilisées sont des cubes de données à trois dimensions. Les deux premières dimensions sont des directions géographiques horizontales x et y, et la troisième dimension "verticale" est le temps t d'enregistrement sismique. Ces cubes constituent ainsi une discrétisation du sous-sol en un ensemble de cellules. A chaque cellule est associées une valeur d'une propriété en fonction du cube : les cellules du cube d'impédance en onde P, contiennent une valeur d'impédance en onde P.

Pour une même profondeur, le temps d'enregistrement d'un jeu de données sismiques acquis à un instant donné n'est pas le même que le temps d'enregistrement d'un second jeu de données sismiques acquis ultérieurement car les vitesses de propagation des ondes sismiques dans la roche sont modifiées par la substitution de la saumure par le $CO_2$. On parle d'échelles de temps différentes.

Ainsi, les échelles de temps sont différentes pour les données d'impédance avant et après injection.

De façon connue des spécialistes, l'interprétation de données sismiques 4D comporte une étape de mise en correspondance des temps de propagation des deux jeux de données sismiques, avant et après injection. Une telle technique est communément appelée "*warping*" (*W*). Un exemple est décrit dans le document suivant :
DeVault B., et al., 2007, "Prestack 9-C joint inversion for stratigraphie prédiction in the Williston Basin". 77th SEG Annual International Meeting, Expanded Abstracts, 1039-1043

Ainsi, les données en impédance après injection, $IP^{(PI)}$ et $IS^{(PI)}$, sont mises en correspondance temporelle avec les données avant injection, $IP^{(AI)}$ et $IS^{(AI)}$ pour permettre leur comparaison quantitative. Les données en sortie sont les données sismiques en impédance après "warping" en onde P et en onde S, respectivement notées $WIP^{(PI)}$ et $WIS^{(PI)}$, exprimées dans le même repère temporel que les données d'impédance avant injection.

2.2 Construction de cubes de variation de masse volumique et d'incompressibilité

Dans un premier temps, on transforme les données d'impédance en cubes du produit module d'incompressibilité $K$ par la masse volumique $\rho$ du sous-sol. Ces cubes sont notés $KR^{(AI)}$, pour le cube avant injection, et $KR^{(PI)}$ pour le cube après injection.

Pour réaliser ces transformations, on utilise les formules suivantes :

$$(1) \qquad KR^{(AI)}(x,y,t) = \left(IP^{(AI)}(x,y,t)\right)^2 - \frac{4}{3}\left(IS^{(AI)}(x,y,t)\right)^2$$

avant injection, et

$$(2) \qquad KR^{(PI)}(x,y,t) = \left(WIP^{(PI)}(x,y,t)\right)^2 - \frac{4}{3}\left(WIS^{(PI)}(x,y,t)\right)^2$$

après injection.

Ces équations viennent du fait que les vitesses des ondes sismiques P, $V_p$, et des ondes S, $V_s$, ainsi que les impédances associées $I_P$ et $I_s$ respectent les équations suivantes :

$$\rho V_P^2 = K + \frac{4}{3}\mu \quad ; \quad \rho V_S^2 = \mu \quad ; \quad I_P = \rho V_P$$

et

$$I_S = \rho V_S$$

On en déduit les formules suivantes : $\quad K\rho = I_P^2 - \left(4/3\right)I_S^2 \quad$ et $\quad \mu\rho = I_S^2$

Dans un second temps, on transforme les cubes $KR^{(AI)}$ et $KR^{(PI)}$ en cubes du produit de la rigidité (ou module de cisaillement $\mu$), par la masse volumique $\rho$ du sous-sol. Ces cubes sont notés $MR^{(AI)}$, pour le cube avant injection, et $MR^{(PI)}$ pour le cube après injection.

Pour réaliser ces transformations, on utilise les formules suivantes :

$$(3) \qquad MR^{(AI)}(x,y,t) = \left(IS^{(AI)}(x,y,t)\right)^2$$

avant injection, et

$$(4) \qquad MR^{(PI)}(x,y,t) = \left(WIS^{(PI)}(x,y,t)\right)^2$$

après injection.

Les cubes des variations relatives des produits K.$\rho$ et $\mu$.$\rho$, du fait de l'injection de $CO_2$, sont notés respectivement $RVKR$ et $RVMR$. Ils sont déduits des formules suivantes:

$$(5) \qquad RVKR(x,y,t) = \frac{KR^{(PI)}(x,y,t) - KR^{(AI)}(x,y,t)}{KR^{(AI)}(x,y,t)} \qquad ,$$

et

$$(6) \qquad RVMR(x,y,t) = \frac{MR^{(PI)}(x,y,t) - MR^{(AI)}(x,y,t)}{MR^{(AI)}(x,y,t)}$$

En négligeant les effets de pression et les variations du module de cisaillement $\mu$ dus à la substitution de la saumure par le $CO_2$, les cubes de variation relative de la masse volumique, noté $RVR$, et de variation relative du module d'incompressibilité, noté $RVK$, sont obtenus par les formules suivantes:

$$(7) \qquad RVR(x,y,t) = RVMR(x,y,t) \; ,$$

et

$$(8) \qquad RVK(x,y,t) = RVKR(x,y,t) - RVMR(x,y,t)$$

2.3 Localisation du panache de $CO_2$

Le $CO_2$ ayant un module d'incompressibilité et une masse volumique plus faible que la saumure, la substitution de la saumure par le $CO_2$ tend à faire diminuer la masse volumique et le module d'incompressibilité effectif de la roche dans la zone d'injection. Les zones de diminution de la masse volumique $\rho$ du sous-sol, sont repérées en calculant le cube filtré des variations relatives de densité, noté *RVRF* et défini par:

$$(9) \qquad RVRF(x, y, t) = \begin{cases} 1 & si & RVR(x, y, t) < 0 \\ 0 & si & RVR(x, y, t) > 0 \end{cases}$$

De même, les zones de diminution du module d'incompressibilité *K* du sous-sol, sont repérées en calculant le cube filtré des variations relatives du module d'incompressibilité, noté *RVKF* et défini par:

$$(10) \qquad RVKF(x, y, t) = \begin{cases} 1 & si & RVK(x, y, t) < 0 \\ 0 & si & RVK(x, y, t) > 0 \end{cases}$$

Par ailleurs, de nombreuses sources de bruits, liées essentiellement à l'acquisition, font que cette diminution du module d'incompressibilité n'est cohérente spatialement qu'au dessus d'un certain seuil $\varepsilon$ des variations relatives du module d'incompressibilité. Les zones de diminution suffisante du module d'incompressibilité *K* du sous-sol, sont repérées en calculant le cube seuillé des variations relatives du module d'incompressibilité, noté *RVKS* et défini par:

$$(11) \qquad RVKS(x, y, t) = \begin{cases} 1 & si & |RVK(x, y, t)| > \varepsilon \\ 0 & si & |RVK(x, y, t)| < \varepsilon \end{cases}$$

Notons que le cube *RVKS* est simplement obtenu par le seuillage (*S*) du cube *RVK* des variations relatives du module d'incompressibilité.

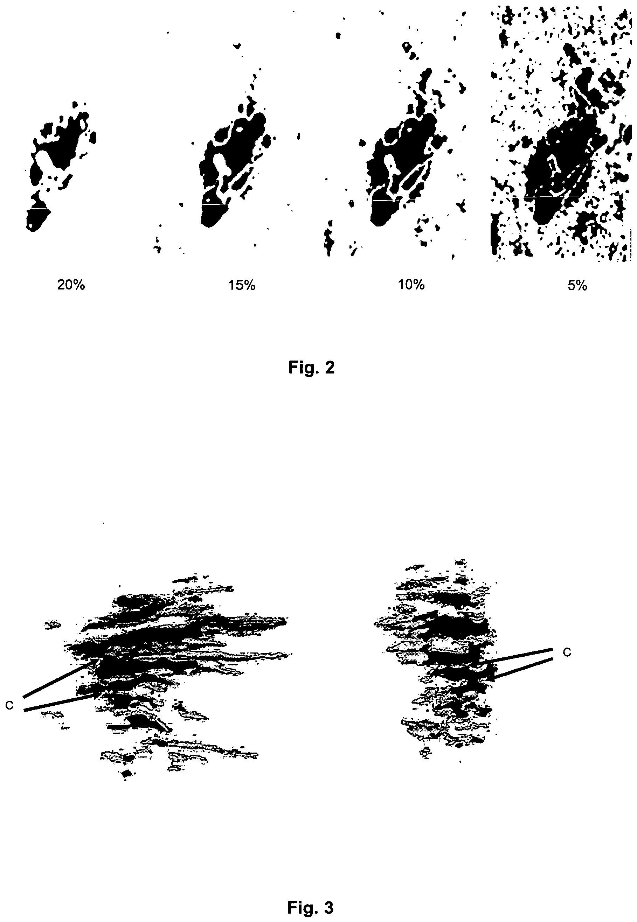

La figure 2 montre une coupe horizontale, à profondeur fixée au niveau du sommet du panache de $CO_2$, du cube seuillé *RVKS* des variations relatives du module d'incompressibilité pour quatre valeurs du seuil : $\varepsilon$ = 5%, 10%, 15% et 20%. Les points du cube associés à des valeurs supérieurs au seuil sont représentés en noir.

Les zones présentant à la fois une diminution de la masse volumique $\rho$ et une diminution suffisante du module d'incompressibilité *K* sont ensuite repérées en calculant le cube seuillé et filtré des variations relatives du module d'incompressibilité, noté RVKSF, et défini par:

$$(12) \qquad RVKSF(x, y, t) = RVRF(x, y, t) \times RVKF(x, y, t) \times RVKS(x, y, t)$$

Enfin, le cube RVR de variation relative de masse volumique est filtré par le cube précédent pour obtenir le cube seuillé et filtré des variations relatives de masse volumique, noté *RVRSF,* et défini par:

$$(13) \qquad RVRSF(x, y, t) = RVKSF(x, y, t) \times RVR(x, y, t)$$

Ce cube est donc constitué d'un ensemble de cellule ayant pour valeur 1, si la cellule contient du $CO_2$, et la valeur 0 si la cellule n'en contient pas, délimitant ainsi l'extension géographique du panache de $CO_2$.

La figure 3 illustre un résultat. Il s'agit de vues tridimensionnelles du panache complet de $CO_2$, coupé par un plan vertical orienté Sud-Ouest Nord-Est (à gauche) et Sud-Est Nord-Ouest (à droite). Le plan de coupe est représenté en noir, et seule la partie du panache située à l'arrière du plan de coupe est représentée (en gris). Certaines connexions entre les différentes couches constituant le panache, visibles par la sismique, sont repérés par des flèches et par la lettre C.

3. Détermination du volume et de la masse du panache de $CO_2$

Selon l'invention, pour déterminer le volume et la masse du panache de $CO_2$, on détermine un cube de saturation en $CO_2$ du sous-sol.

3.1. Construction d'un cube de saturation en $CO_2$ au sein du sous-sol

La détermination de la saturation au sein du sous-sol repose sur la connaissance de la variation relative de la masse volumique *RVRSF* des formations géologiques du sous-sol envahie par le $CO_2$.

Dans les zones de variation relative maximale de la masse volumique, l'injection de $CO_2$ n'a toutefois pas pu chasser totalement la saumure en place. Il reste de la saumure piégée et la saturation en saumure est proche de la saturation dite irréductible en saumure, notée $S_{wi}$ ($0 \leq S_{wi} \leq 1$). Ce paramètre, connu des spécialistes en pétrophysique, est une caractéristique du milieu poreux et est un nouveau paramètre d'entrée. Les valeurs typiques de ce paramètre dans les milieux très poreux et très perméables choisis pour le stockage de $CO_2$ sont souvent bien inférieures à 0,1, et peuvent descendre à 0,05. La saturation maximale correspondant en $CO_2$, notée $S_{CO_2}^{(MAX)}$ est donnée par la formule:

$$(14) \quad S_{CO_2}^{(MAX)} = 1 - S_{wi}$$

La saturation minimale de $CO_2$ est nulle et correspond aux zones non encore atteintes par le panache de $CO_2$. Par ailleurs, la variation relative de masse volumique de la roche due à la substitution de la saumure par du $CO_2$ étant proportionnelle à la saturation en $CO_2$, le cube de saturation en $CO_2$, noté *SC*, est obtenu par la formule :

$$(15) \quad SC(x, y, t) = RVRSF(x, y, t) \frac{S_{CO_2}^{(MAX)}}{RVRSF^{(MAX)}}$$

où $RVRSF^{(MAX)}$ désigne la valeur maximale (en valeur absolue) des variations relatives de masse volumique calculée dans le cube *RVRSF*. Cette valeur particulière de variation de masse volumique correspond à la condition de saturation irréductible en saumure.

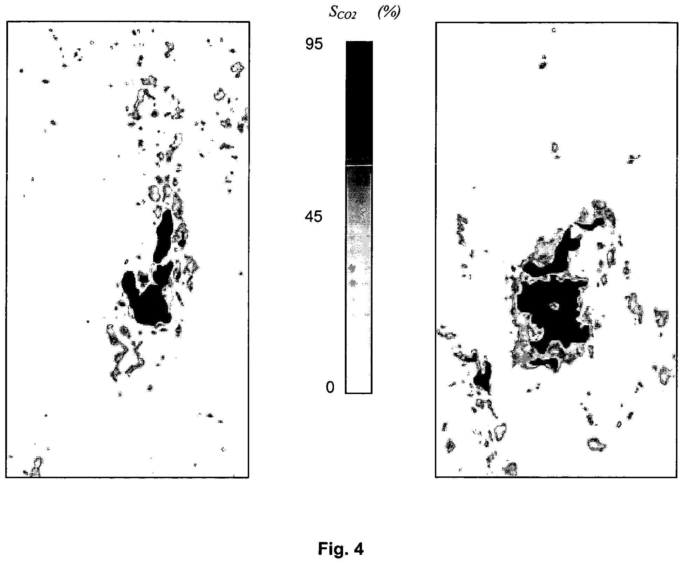

La figure 4 illustre des coupes horizontales au niveau du sommet (à gauche) et au niveau de la base (à droite) du panache de $CO_2$ du cube *SC* de saturation en $CO_2$. Sur l'échelle la saturation en $CO_2$ est notée $S_{CO2}$.

Selon un mode de réalisation, les données sont transformées en profondeur. Comme indiqué précédemment, dans toutes données précédentes la troisième dimension "verticale" est le temps *t* d'enregistrement sismique. Dans l'étape suivante, on transforme la variable temps *t* en variable profondeur z. Pour ce faire on utilise une technique bien connue des spécialistes : la conversion temps-profondeur (*CTP*).

La conversion temps-profondeur (*CTP*) peut être effectuée sur toutes les données précédentes, en particulier le cube *SC* de saturation en $CO_2$. Le cube *SC* est donc transformé en un cube en profondeur de saturation en $CO_2$, noté *SCP*.

3.2. Détermination du volume et de la masse du panache de $CO_2$

Les cubes de données utilisés sont constitués de cellules, connues des spécialistes sous le nom "*voxel*" (contraction des termes anglais "volumetric pixel"). Ces cellules sont de dimensions $\Delta x$, $\Delta y$, et $\Delta z$ connues. Dans les directions horizontales ces dimensions $\Delta x$ et $\Delta y$ sont connues des spécialistes sous le nom "inter-trace". Ce sont des données d'acquisition qui correspondent aux distances entre les points d'enregistrement successifs pour un même point de tir, respectivement dans les directions *x* et *y*. La dimension verticale $\Delta z$ est le taux d'échantillonnage $\Delta t$ d'enregistrement des données sismiques, convertie en profondeur par conversion temps-profondeur.

Le volume total de $CO_2$, noté *VTC,* peut être calculé en sommant toutes les valeurs du cube en profondeur *SCP* de saturation en $CO_2$, et en pondérant le résultat par le volume occupé par une cellule et par la porosité moyenne $\phi$ de la roche, soit :

$$(16) \quad VTC = \phi \times \Delta x \times \Delta y \times \Delta z \sum_{x,y,z} SCP(x, y, z)$$

La porosité moyenne $\phi$ de la roche, définie par le rapport entre le volume des pores et le volume total de la roche, est mesurée ou estimée par les spécialistes à partir des diagraphies ou des mesures sur échantillons issus des puits (par exemple, Calvert, 2005). Cette grandeur est une caractéristique du milieu poreux et est un nouveau paramètre d'entrée. Les conditions thermodynamiques (pression de fluide et température) au niveau du point d'injection sont en général connues. A partir de ces données les spécialistes thermodynamiciens peuvent calculer la masse volumique moyenne $\rho_{CO_2}$ du $CO_2$ d'après des tables de constantes physiques ou à l'aide de référence telle que la référence suivante: Span, R., Wagner, W., 1996 "A New Equation of State for Carbon Dioxide Covering the Fluid Région from the Triple-Point Temperature to 100 K at Pressures up to 800 MPa", J. Phys. Chem. Ref. Data, Vol. 25, No. 6, pp. 1509 - 1596

En introduisant cette masse volumique moyenne du $CO_2$, $\rho_{co_2}$, on peut estimer la masse totale $MTC$ du $CO_2$, en utilisant la formule suivante :

$$(17) \qquad MTC = \rho_{CO_2} \times VTC$$

## Résultats

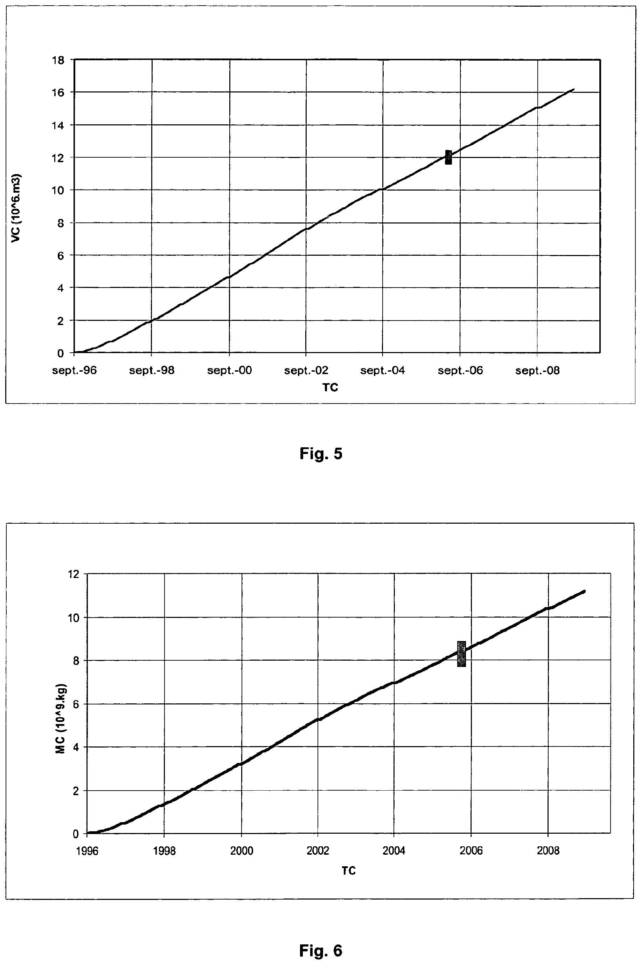

Les figures 5 et 6 illustrent la qualité des résultats fournis par le procédé selon l'invention pour estimer le volume et la masse de $CO_2$ en place.

La figure 5 illustre le volume total ($VC$) de $CO_2$ en condition de fond en fonction du temps calendaire ($TC$). La courbe correspond aux données d'injection, le rectangle gris représente l'estimation du volume de $CO_2$ libre fournie par le procédé selon l'invention.

La figure 6 illustre la masse totale ($MC$) de $CO_2$ en condition de fond en fonction du temps calendaire ($TC$). La courbe correspond aux données d'injection, le rectangle gris représente l'estimation de la masse de $CO_2$ libre fournie par le procédé selon l'invention.

On constate que l'estimation est conforme aux données, validant ainsi le procédé.

## Application

Le procédé selon l'invention, pour caractériser en détail, et pas seulement globalement, un panache de $CO_2$, peut être intégré à un procédé d'injection de $CO_2$ dans une formation souterraine, notamment en permettant de mieux décrire la variation au cours du temps des répartitions de fluides dans le niveau géologique de stockage de $CO_2$.

Le procédé permet de compartimenter le niveau géologique de stockage de $CO_2$, c'est-à-dire de repérer les différents compartiments du sous-sol, ainsi que les connectivités entre ces différents compartiments. Ces informations précises permettent de repérer et estimer les volumes de $CO_2$ effectivement stockés dans le sous-sol et contrôler l'intégrité des couvertures géologiques.

Lors d'un stockage géologique de gaz acide, tel que le $CO_2$, il est nécessaire de s'assurer que le réservoir souterrain (milieu poreux) dans lequel on injecte le gaz est bien étanche. Cependant, il peut arriver que du gaz parvienne à s'échapper de ce réservoir naturel. Pour remédier à ses fuites, différentes techniques, dites techniques de « remédiation », ont été mises au point par les opérateurs.

Après avoir déterminé l'extension géographique, le volume et la masse du panache de $CO_2$, on peut vérifier l'intégrité du site de stockage.

En effet, de même que la résolution spatiale du procédé permet de repérer avec précision les connexions étroites entre les différentes couches constituant le panache de $CO_2$ (voir repères C sur la figure 3), de même le procédé proposé permet, non seulement de préciser finement en 3D l'extension latérale du panache, mais surtout de détecter sans ambiguïté toute fuite de $CO_2$ libre à travers la couverture, dans la partie supérieure de la zone de stockage. La grande résolution spatiale du procédé dans ce cas précis devient une nécessité. La détection d'éventuelles fuites de $CO_2$ libre permet de mettre en oeuvre ces méthodes de remédiations pour éviter ces fuites.

Par ailleurs, il est indispensable de suivre l'évolution du gaz injecté pour déterminer si le stockage s'effectue correctement, à l'endroit souhaité, évaluer la quantité effectivement stockée, et vérifier l'intégrité du réservoir en s'assurant qu'il n'existe aucune fuite de $CO_2$ libre. A partir de ces informations, on peut également déterminer si d'autres puits d'injection sont nécessaires.

De façon plus générale, on peut améliorer notre compréhension des mécanismes de stockages : si le $CO_2$ libre ne représente pas la totalité du $CO_2$ injecté, c'est qu'il s'est transformé. Le procédé proposé permet de fournir des informations plus fines et plus précises pour contraindre le modèle de comportement du stockage. Le procédé; en permettant de mieux suivre l'évolution spatiale des contacts fluides lors de l'injection, permet de confirmer ou, au contraire d'invalider le modèle d'écoulement, et par conséquent permet de suivre plus distinctement le front de $CO_2$ stocké dans le sous-sol.

Ceci permet une meilleure gestion de l'injection de $CO_2$ et de tout le processus industriel. Par exemple cela peut conduire à des conditions d'exploitation du site de stockage différentes : emplacement de nouveau puits d'injection, modification des pressions d'injection, ajout d'additifs...

On note également que le procédé de surveillance selon l'invention ne nécessite pas de forer de nouveaux puits dans la zone de stockage, ce qui contribue à réduire considérablement les risques de fuite. Les données de puits ne sont en effet pas indispensables, et si elles sont requises pour l'inversion, il est tout à fait possible, et conseillé, de réaliser le forage loin de la zone de stockage pour éviter les problèmes de fuite.

## Revendications

1. Procédé de surveillance d'un site de stockage géologique de $CO_2$, à partir d'un premier jeu de données sismiques imageant une zone du sous-sol et acquis avant une injection de $CO_2$ dans une formation souterraine de ladite zone, et d'un second jeu de données sismiques imageant ladite zone du sous-sol et acquis après ladite injection de $CO_2$, **caractérisé en ce qu'**on localise un panache de $CO_2$ libre formé à la suite de ladite injection en réalisant les étapes suivantes :

   - on construit pour chaque jeu de données sismiques un cube d'impédances sismiques en onde P et un cube d'impédances sismiques en onde S, au moyen d'une inversion stratigraphique;
   - on construit un cube de variation de masse volumique à partir desdits cubes d'impédances sismiques en onde P et en onde S avant et après injection de $CO_2$, ledit cube de variation de masse volumique discrétisant ladite zone du sous-sol en un ensemble de cellules ;
   - on construit un cube de variation de module d'incompressibilité à partir desdits cubes d'impédances sismiques en onde P et en onde S avant et après injection de $CO_2$, ledit cube de variation de module d'incompressibilité discrétisant ladite zone du sous-sol en un ensemble de cellules ;
   - on localise ledit panache de $CO_2$ libre au sein de ladite zone, en identifiant des cellules où ladite variation de masse volumique est négative et où ladite variation de module d'incompressibilité est négative et de valeur absolue supérieure à un seuil positif donné, lesdites cellules ainsi identifiées délimitant ledit panache de $CO_2$ libre ;
   - on vérifie une intégrité dudit site de stockage en détectant une fuite de $CO_2$, par analyse de ladite localisation dudit panache de $CO_2$ libre, et on met en place des techniques de remédiations pour stopper ladite fuite, et/ou
   - on modifie des conditions d'exploitation du site de stockage après détection d'une transformation de $CO_2$ libre par comparaison d'un volume et/ou d'une masse dudit panache de $CO_2$ libre avec un volume et/ou une masse de $CO_2$ injecté.

2. Procédé selon la revendication 1, dans lequel on détermine ledit volume dudit panache de $CO_2$ libre, en réalisant les étapes suivantes :

   - on construit un cube de saturation en $CO_2$ au sein de ladite formation, à partir dudit cube de variation relative de la masse volumique ;
   - on détermine ledit volume dudit panache de $CO_2$ libre en sommant toutes les valeurs du cube de saturation en $CO_2$, et en pondérant ladite somme par une porosité moyenne de ladite formation et par un volume occupé par une cellule élémentaire dudit cube de saturation.

3. Procédé selon la revendication 2, dans lequel on détermine ladite masse dudit panache de $CO_2$ libre, en multipliant ledit volume dudit panache de $CO_2$ libre par une masse volumique moyenne du $CO_2$.

4. Procédé selon l'une des revendications 2 et 3, dans lequel on construit ledit cube de saturation en $CO_2$ en réalisant les étapes suivantes :

   - on détermine une saturation $S_{wi}$ irréductible en saumure de ladite formation ;
   - on détermine une valeur absolue maximale dudit cube de variation de masse volumique, et on calcule un rapport en divisant cette valeur absolue maximale par 1-$Swi$ ;
   - on construit un cube de saturation en $CO_2$ en multipliant chaque valeur dudit cube de variation de masse volumique par ledit rapport; et
   - on convertit en profondeur ledit cube de saturation au moyen d'une technique de conversion temps-profondeur.

**Patentansprüche**

1. Verfahren zur Überwachung eines geologischen $CO_2$-Lagerstandorts auf Basis eines ersten seismischen Datensatzes, der eine Zone des Untergrunds abbildet und vor einer Injektion von $CO_2$ in eine unterirdische Formation der Zone erhalten wurde, und eines zweiten seismischen Datensatzes, der die Zone des Untergrunds abbildet und nach der Injektion von $CO_2$ erhalten wurde, **dadurch gekennzeichnet, dass** eine Wolke von freiem $CO_2$, die nach dem Einspritzen gebildet wurde, lokalisiert wird, wobei die folgenden Schritte durchgeführt werden:

   - für jeden seismischen Datensatz Konstruktion eines Kubus von seismischen Wellenimpedanzen P und eines Kubus von seismischen Wellenimpedanzen X mit Hilfe einer stratigraphischen Inversion;
   - Konstruktion eines Kubus einer Volumenmassenvariation auf Basis der Kuben von seismischen Wellenimpedanzen P und S vor und nach der Injektion von $CO_2$, wobei der Kubus einer Volumenmassenvariation die Zone des Unterbodens in einer Gesamtheit von Zellen diskretisiert;
   - Konstruktion eines Kubus einer Variation eines Inkompressibilitätsmoduls auf Basis der Kuben von seismischen Wellenimpedanzen P und S vor und nach der Injektion von $CO_2$, wobei der Kubus einer Variation eines Inkompressibilitätsmoduls die Zone des Unterbodens in einer Gesamtheit von Zellen diskretisiert;
   - Lokalisierung der Wolke von freiem $CO_2$ innerhalb der Zone, wobei Zellen identifiziert werden, bei denen die Volumenmassenvariation negativ ist, und bei denen die Variation eines Inkompressibilitätsmoduls negativ ist, und deren Absolutwert größer als ein gegebener positiver Grenzwert ist, wobei die so identifizierten Zellen die Wolke von freiem $CO_2$ begrenzen;
   - Überprüfung einer Integrität des Lagerstandorts, wobei eine Leckage an $CO_2$ durch Analyse der Lokalisierung der Wolke von freiem $CO_2$ erkannt und Sanierungstechniken eingesetzt werden, um die Leckage zu stoppen, und/oder
   - Änderung der Nutzungsbedingungen des Lagerstandorts nach Erkennen einer Umwandlung von freiem $CO_2$ durch Vergleichen eines Volumens und/oder einer Masse der Wolke von freiem $CO_2$ mit einem Volumen und/oder einer Masse von injiziertem $CO_2$.

2. Verfahren nach Anspruch 1, bei dem das Volumen der Wolke von freiem $CO_2$ bestimmt wird, wobei die folgenden Schritte durchgeführt werden:

   - Konstruktion eines $CO_2$-Sättigungskubus innerhalb der Formation auf Basis des Kubus einer relativen Variation der Volumenmasse;
   - Bestimmung des Volumens der Wolke von freiem $CO_2$, wobei alle Werte des $CO_2$-Sättigungskubus summiert werden, und die Summe durch eine durchschnittliche Porosität der Formation und durch ein von einer elementaren Zelle des Sättigungskubus eingenommenes Volumen gewichtet wird.

3. Verfahren nach Anspruch 2, bei dem die Masse der Wolke von freiem $CO_2$ bestimmt wird, wobei das Volumen der Wolke von freiem $CO_2$ mit einer durchschnittlichen Volumenmasse des $CO_2$ multipliziert wird.

4. Verfahren nach einem der Ansprüche 2 und 3, bei dem der $CO_2$-Sättigungskubus konstruiert wird, wobei die folgenden Schritte durchgeführt werden:

   - Bestimmung einer irreduktiblen Solesättigung $S_{wi}$ der Formation;
   - Bestimmung eines maximalen Absolutwerts des Kubus einer Volumenmassenvariation und Berechnung eines Verhältnisses durch Dividieren dieses maximalen Absolutwerts durch 1-$S_{wi}$;
   - Tiefenkonversion des Sättigungskubus mit Hilfe einer Zeit-Tiefen-Konversionstechnik.


**Claims**

1. A method of monitoring a $CO_2$ geological storage site, from a first set of seismic data imaging a subsoil zone and acquired before a $CO_2$ injection in an underground formation of said zone, and from a second set of seismic data imaging said subsoil zone and acquired after $CO_2$ injection, **characterized in that** a free $CO_2$ plume formed after said injection is located by carrying out the following stages:

   - constructing for each seismic data set a P-wave seismic impedance cube and an S-wave seismic impedance cube, by means of a stratigraphic inversion,
   - constructing a density variation cube from said P-wave and S-wave seismic impedance cubes before and

after $CO_2$ injection, said density variation cube discretizing said subsoil zone into a set of cells,
- constructing an incompressibility modulus variation cube from said P-wave and S-wave seismic impedance cubes before and after $CO_2$ injection, said incompressibility modulus variation cube discretizing said subsoil zone into a set of cells,
- locating said free $CO_2$ plume in said zone, by identifying cells where said density variation is negative and where said incompressibility modulus variation is negative, and of absolute value greater than a given positive threshold, said cells thus identified delimiting said free $CO_2$ plume.
- checking an integrity of said storage site by detecting a $CO_2$ leak through analysis of said location of said free $CO_2$ plume, and implementing remediation techniques to stop said leak, and/or
- modifying storage site exploitation conditions after detecting a transformation of free $CO_2$ by comparison of a volume and/or of a mass of said free $CO_2$ plume with a volume and/or a mass of $CO_2$ injected.

2. A method as claimed in claim 1, wherein said volume of said free $CO_2$ plume is determined by carrying out the following stages:

- constructing a cube of $CO_2$ saturation in said formation, from said density relative variation cube,
- determining said volume of said free $CO_2$ plume by adding up all the values of the $CO_2$ saturation cube, and by weighting said sum by a mean porosity of said formation and by a volume occupied by an elementary cell of said saturation cube.

3. A method as claimed in claim 2, wherein said mass of said free $CO_2$ plume is determined by multiplying said volume of said free $CO_2$ plume by a mean density of the $CO_2$.

4. A method as claimed in any one of claims 2 and 3, wherein said $CO_2$ saturation cube is constructed by carrying out the following stages:

- determining an irreducible brine saturation $S_{wi}$ for said formation,
- determining a maximum absolute value for said density variation cube and calculating a ratio by dividing this maximum absolute value by $1 - S_{wi}$,
- constructing a $CO_2$ saturation cube by multiplying each value of said density variation cube by said ratio, and
- converting to depth said saturation cube by means of a time-depth conversion technique.

**Fig. 1**

20%      15%      10%      5%

**Fig. 2**

**Fig. 3**

$S_{CO2}$   *(%)*

Fig. 4

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020013687 A

**Littérature non-brevet citée dans la description**

- **ARTS, R. et al.** Estimation of the mass of injected CO2 at Sleipner using time-lapse seismic data, Expanded Abstracts of the 64th EAGE. *Florence,* 2002
- **CALVERT, R.** Insights and Methods for. 4D Reservoir Monitoring and Characterization. *SEG/EAGE DISC (Distinguished Lecture Course,* 2005
- 4D seismic quantification of a growing CO2 plume at Sleipner. **CHADWICK, R.A. ; ARTS, R. ; O. EIKEN.** Petroleum Geology: North-West Europe and Global Perspectives-Proceedings. Petroleum Geology Conference, 2005, 1385-1399
- **BOURBIÉ, T. ; COUSSY, O. ; B. ZINSZNER.** *Acoustics of porous media,* 1987
- **RASOLOFOSAON P. ; ZINSZNER B.** Laboratory petroacoustics for seismic monitoring feasibility study. *The Leading Edge,* 2004, vol. 23 (3), 252-258
- **RASOLOFOSAON, P.N.J. ; ZINSZNER, B.E.** The unreasonable success of Gassmann's theory. *Revisited, Journal of seismic Exploration,* 2007, vol. 16 (2-4), 281-301

- **ZINSZNER, B. ; F.M. PELLERIN.** *A geoscientist's guide to petrophysics,* 2007
- **T. TONELLOT ; D. MACÉ ; V. RICHARD.** Prestack elastic waveform inversion using a priori information. *Ann. Internat. Mtg: Soc. of Expl. Geophys.,* 1999, 800-804
- **TONELLOT T. ; MACÉ D. ; RICHARD V.** Joint stratigraphic inversion of angle-limited stacks. *SEG Annual International Meeting,* 2001, 227-230
- **A.S BARNOLA ; B. ANDRIEUX ; T. TONELLOT ; O. VOUTAY.** Pre-stack stratigraphic inversion and attribute analysis for optimal reservoir characterisation. *SEG Expanded,* 2003, vol. 22, 1493
- **DEVAULT B. et al.** Prestack 9-C joint inversion for stratigraphie prédiction in the Williston Basin. *SEG Annual International Meeting,* 2007, 1039-1043
- **SPAN, R. ; WAGNER, W.** A New Equation of State for Carbon Dioxide Covering the Fluid Région from the Triple-Point Temperature to 100 K at Pressures up to 800 MPa. *J. Phys. Chem. Ref. Data,* 1996, vol. 25 (6), 1509-1596